# EUROPEAN PATENT SPECIFICATION

(11) **EP 2 289 353 B1**
(45) Date of publication and mention of the grant of the patent: **25.02.2015**
(21) Application number: 10173702.1
(22) Date of filing: 23.08.2010
(51) Int. Cl.: A23L 1/325, A22C 25/00, A23L 1/015

(54) **Method and apparatus for removal of parasites from fish liver**
Verfahren und Vorrichtung zur Bekämpfung von Parasiten aus Fischleber
Procédé et appareil pour l'élimination de parasites de foie de poisson

(30) Priority: 27.08.2009 DK 200970100; 27.08.2009 DK 200970102; 09.12.2009 DK 200901297
(43) Date of publication of application: 02.03.2011
(73) Proprietor: Bornholms A/S, 3730 Nexo (DK)
(72) Inventor: Pedersen, Søren, 3700 Rønne (DK); Sieverts, Christian, 2960 Rungsted Kyst (DK)
(74) Representative: Trier, Mikkel Roed

(56) References cited:
- WO-A1-95/31115
- CA-A1- 2 103 774
- DATABASE WPI Week 199419 Thomson Scientific, London, GB; AN 1994-157932 XP002671203, -& SU 1 799 544 A1 (SEVTEKHRYBPROM PRODN TECH ASSOC) 7 March 1993 (1993-03-07)
- DATABASE WPI Week 199109 Thomson Scientific, London, GB; AN 1991-064371 XP002671204, & SU 1 576 120 A (KALUGIN M D) 7 July 1990 (1990-07-07)

## Description

The present invention relates in a first aspect to a method for removal of nematodes from fish liver, preferably cod liver, said fish liver comprising liver meat at least partly surrounded by connective tissue membrane attached to said liver meat, said nematodes being situated on an inside of said membrane in respective depressions of said liver meat as defined in claim 1.

Canned fish liver, such as cod liver, is consumed all over the world as a major source of vitamins, and is especially rich in essential vitamins such as vitamins A, D and E.

Nematodes such as Anisakis Simple and Phocanema Decitiens sp. are often found in cod livers, more specifically on the inside of the connective tissue membrane of the liver, i.e. between membrane and liver meat. The nematodes are attached to the membrane and are situated in respective depressions on the "surface" of the liver meat, these depressions having shape and size corresponding to that of the respective nematode. It is essential to remove any nematodes from the liver before canning it, first and foremost out of aesthetic considerations; in canned fish liver the nematodes show as black lines in the meat, which appear very unpleasant to the consumer.

Nematodes are dependent upon intermediate hosts in order to be able to infect fish. Examples of intermediate hosts include marine mammals, such as seals and whales. In the marine environments where cod is found, these intermediate hosts are also often found. Previously, to avoid nematodes in canned cod liver it was preferred to use fish caught in geographical areas with few intermediate hosts for the nematodes in question. However, a fall in the supply of cod from these areas has made it necessary to use raw material also from areas where there are more intermediate hosts; for example in the northern and southern waters of the planet, and along the coast of countries in these areas such as, for example, Lofoten and Finnmark in northern Norway. Further, the amount of dioxin of livers of cod caught in some waters is on a level, which is today suspected to make the product dangerous for humans to consume. The European Union has adopted provisions regarding dioxin levels in practice making liver caught anywhere but in the Atlantic Sea illegal to market, and other countries are following.

In the prior art several methods for removal of nematodes from fish liver have been suggested, some methods using mechanical or chemical means, or a combination.

In one example of such a known method, manually operated needles are used, which apply suction to remove the nematodes. This method is rather effective, but unfortunately requires many man-hours. Further, manual operation of such needles is somewhat dangerous.

Another prior art method uses a standard mechanical deskinner, e.g. a Trio Deep Skinner (TM), comprising a roller with cold surfaces, perhaps about -30°C. When fish liver passes between the roller, the liver membrane sticks to the surfaces and is cut off the liver by means of a knife, the nematodes attached to the membrane in principle also being cut off. This method is expensive because of the need to supercool the rollers, maintenance of the machines, and a need for manually positioning the liver pieces. Also, it is resource demanding to cool the roller to the low temperature and to ensure that all nematodes are removed, making this method unsatisfactory regarding the percentage of nematodes removed. Finally, the capacity of one machine is typically limited.

IS 1447 describes a three-step chemical process wherein the liver is first treated in a water bath for 40-50 seconds at about 53°C, and is subsequently cooled in cold water before the liver is enzyme-treated in an aqueous buffer solution containing proteolytic enzymes. The enzyme treatment takes place at about 15°C and has a duration of about 15 minutes.

WO 95/31115 A1 discloses a like chemical process in which the product is first subjected to preheating at 60-100°C in a hot liquid bath to denature the protein structures in the membrane. The product is then transferred to a proteolytic enzyme bath having temperatures of 40-60°C for 5-10 minutes, whereby the membrane is removed. Subsequently, nematodes can be removed by means of massage in a water bath. The product is then after-heated for 120-240 seconds in a steam bath (i.e. at 100°C) or a hot liquid bath (at 60-100°C) to inactivate the enzyme activity before the product is finally cooled in a cold liquid bath.

The prior art methods disclosed are generally relatively slow and troublesome. In the chemical processes many steps need be carried out before the product is ready to be canned, and the enzyme treatment needs to be very carefully controlled in order to avoid compromising the quality of the liver. Quite often the canned liver will not be firm enough and have a tendency to crumble. Also, the proteolytic enzymes used are relatively expensive and are suspected to be carcinogenic to humans.

Thus, in view of the above the object of the first aspect of the present invention is to provide a method as initially defined, which method is more economic and effective, and avoids the use of enzymes, without the quality of the liver being compromised.

To fulfil this object the method according to the first aspect of the invention further comprises the steps of the characterizing part of claim 1, dependent claims defining preferred embodiments of the first aspect of the invention.

The inventor associated with the present invention has discovered that treating fish liver with steam in mere seconds is sufficient to allow for the connective tissue membrane to contract, thereby pulling out the nematodes from the respective depressions in which they are located. The heat transmission from the steam to the surface of the liver has proven to first initiate contraction of the membrane and in the following seconds making the membrane hard and brittle. Thus, a subsequent steam treatment time of a few seconds is sufficient to allow for the connective tissue membrane to be completely released from the liver meat. The main part of membrane and nematode residues tend to fall off by themselves and any remaining residues can be easily washed or rinsed off by means of for example spraying water on the product, i.e. no water bed massage is necessary.

Experiments have proven that free steam, i.e. with a temperature of about 100°C, which is very easy to generate and use in the process, has a sufficiently high heat transfer coefficient to allow for removal of membrane and nematodes in such a short time that the process can be completed before the liver meat is negatively influenced by the heat, i.e. before the liver meat changes character, color, taste or texture. Although free steam is preferred because of the reduction of production costs, it is possible to achieve the same result applying steam having a temperature of 90 to 110°C, preferably 95 to 105°C, more preferred 99 to 101°C.

Lower treatment times can be achieved by means of more directly applying the steam or applying larger amounts of steam to the membrane. Spraying large amounts of steam directly onto the liver, sufficient treatment times of as little as 2 seconds can be achieved. The preferred total steam treatment time lies within an interval from 2 to 90 seconds, preferably 20 to 70 seconds, more preferred 40 to 60 seconds, most preferred 45 to 55 seconds. A treatment time in the preferred intervals provides a more optimum balance between treatment time, controlling the treatment and the cost of building and operating a suitable treatment apparatus.

In a preferred embodiment of the first aspect of the invention said treatment steps are carried out in a steam chamber, pieces of fish liver being transported on a conveyor belt, preferably comprising a wire grid, through said steam chamber, steam dischargers above and below said conveyor band preferably discharging steam into said steam chamber. This provides an effective apparatus with low building and operating costs. A wire grid forming the surface of the conveyor belt allows for the steam to reach all surfaces of the liver. The liver must be spread on the belt in one layer. In a development of this embodiment said steam treatment steps are carried out in a steam treatment zone defined on its upper side by an internal steam dome surrounded on its sides and at its upper end by a vapor extractor extending into a vapor outlet. Enclosing the steam treatment in a steam treatment zone below a steam dome provides a more economic process since the steam will be less likely to escape into the vapor extractor.

In a second aspect the invention relates to an apparatus for carrying out the method according to the first aspect of the invention, said apparatus being defined in claim 6, dependent claim 7 defining a preferred embodiment of this aspect of the invention.

The apparatus according to the second aspect of the invention provides advantages similar to those described above in relation to the first aspect of the invention.

In a third aspect the invention relates to a method for reducing the oil content of fish liver, preferably cod liver, said fish liver comprising liver meat at least partly surrounded by tissue membrane attached to said liver meat.

Another problem relating to canned cod liver is that the natural oil content varies over the year especially in the North Atlantic due to varying living conditions. In the mating season the fish are typically fat, and the liver oil content is typically very high. During the winter the oil content often becomes significantly lower.

After canning of the cod liver the canned product is typically autoclaved in an autoclave, whereby part of the liver oil content will be released from the liver meat. The amount of released oil depends on the oil content of the liver. If the liver is fat, the amount of free oil in the can will be too large for the taste of the ordinary consumer. Most consumers expect a maximum of about 40% oil. Further, the product characteristics vary depending on when and where the fish has been caught, which is unfortunate regarding consumer satisfaction. Consumers would normally expect a product from two different cans to be more or less identical.

It is known that hot smoking of the liver before canning is able to somewhat reduce the oil content. However, hot smoking optimally removes only a small part of the oil, and it is hard to control the amount of oil removed. Further, canned non-smoked fish liver is also sold.

One method of reducing the oil content of the liver is disclosed in above-mentioned WO 95/31115 A1. As mentioned WO 95/31115 A1 discloses the optional step of after-heating for 120-240 seconds in for example a steam bath (i.e. at 100°C) to inactivate the enzyme activity. However, another purpose of this step is to reduce the oil content of the cleaned cod liver. The removed oil can be collected to be used as valuable fish oil. Unfortunately, the inventor associated with the present invention has discovered that using steam (at 100°C) for such a period of time seriously damages texture and other characteristics of the liver throughout the liver meat. Also, it is difficult to control the amount of oil removed. Finally, this method is somewhat expensive since the liver is heated to a high temperature.

In the following an example of a method will be discussed, which method avoids negatively influencing the characteristics of the liver meat, is easier to control and cheaper to operate.

The inventor associated with the present invention has discovered that after the tissue membrane has been at least partly detached from the liver meat, e.g. by means of the method according to the first aspect of the invention, treating the fish liver with humid air of high relative moisture content and a temperature of 40 to 70°C for a relatively long period of time allows for removing large amounts of the natural liver oil from the liver. If the temperature is lower than about 40°C, no or only very small amounts of oil are removed. At above 70°C the characteristics, especially the texture, of the liver meat in negatively influenced. The removal of oil can be easily controlled by adjusting the treatment time and/or the temperature.

According to an example of a method the humid air has a relative air humidity of 80 to 100%. Better results are achieved at 90 to 100%, more preferred at least 95%, and most preferred at least 98 or 99%. In practice the relative air humidity should be close to 100%, but condensation on the surface of the liver meat should be avoided. The treatment time is between 5 and 30 minutes, preferably 10 and 25 minutes, most preferred 15 and 20 minutes. The treatment temperature is preferably 50 to 60°C, more preferred 53 to 57°C, and most preferred about 55°C. At about 55°C a near optimum relationship between treatment time and treatment temperature is achieved.

The treatment air is preferably heated and humidified by means of steam from a steam discharger, preferably by means of a steam lance with a moisture-heat distributor, such as a sponge, which primarily distributes moisture on air form, i.e. not on steam form. It is preferred to avoid direct discharge of steam into the treatment air in order to avoid condensation of water on the liver surface.

If the fish liver is to be smoked, hot smoking can advantageously be carried out simultaneously with treating the fish liver with humid air. Besides from being cheaper, this also provides the advantage of the hot smoking contributing to the oil removal.

The method according to the example method can advantageously be combined with the method according to the first aspect of the invention. This method can be carried out in a plant combining the apparatuses of the second aspect of the invention and an example of an apparatus, the apparatuses preferably being positioned in series.

In the following the invention will be explained with reference to the schematic drawings, in which
Fig. 1 shows a schematic cross-sectional view of an embodiment of an apparatus according to the second aspect of the present invention for carrying out an embodiment of the method according to the first aspect of the invention,
Fig. 2 shows the apparatus of Fig. 1 in a view taken along the line II-II in Fig. 1,
Fig. 3 shows the apparatus of Fig. 1 in a view seen from above,
Fig. 4 shows a side view of an example of an apparatus for carrying out an example of a method,
Fig. 5 shows a detail of the apparatus of Fig. 4 in a view seen from one end,
Fig. 6 shows a cod liver treatment plant with apparatus according to both the second aspect of the present invention and the example apparatus for carrying out an embodiment of a cod liver treatment method according to both the first aspect of the invention and the example method, and
Fig. 7 shows the cod liver treatment plant of Fig. 6 in a view seen from one end.

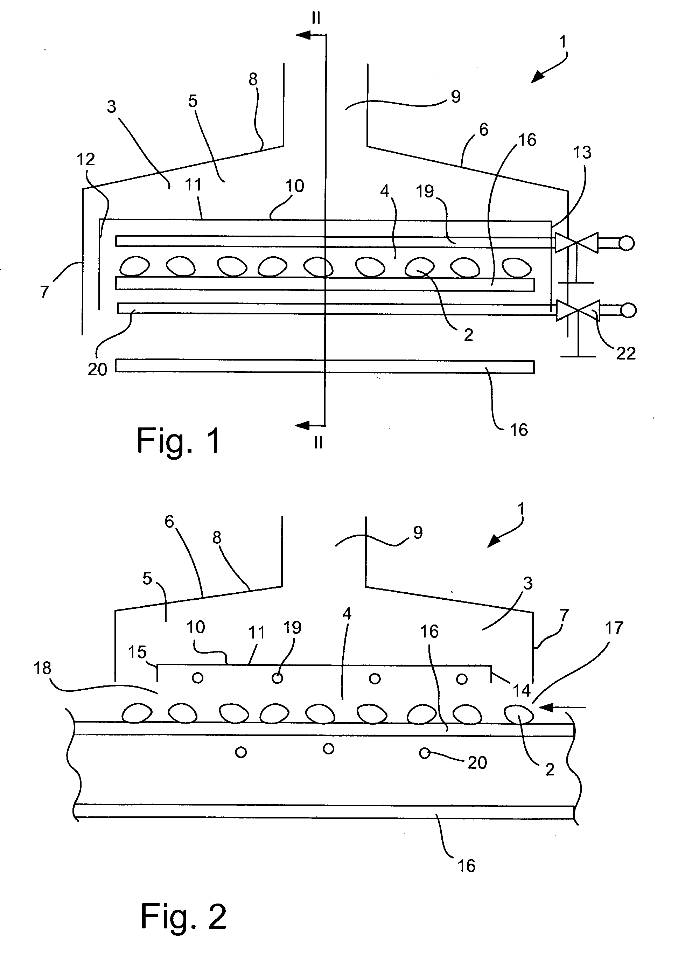

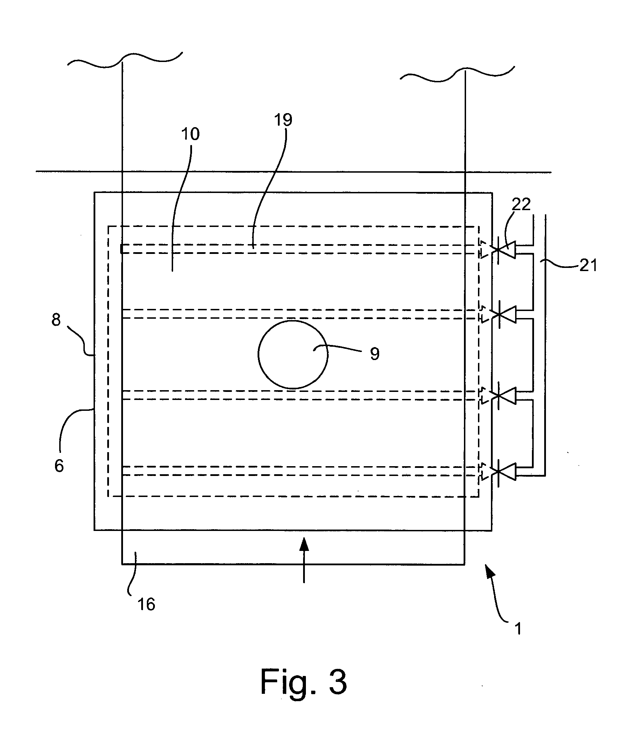

Figs 1 to 3 show an apparatus 1 for carrying out a method for removal of nematodes (not shown) from pieces of cod liver 2. The apparatus 1 comprises a fish liver steam treatment chamber 3 adapted for steam treating the liver pieces 2. The treatment chamber 3 comprises a steam treatment zone 4 and a vapor extraction zone 5. The treatment chamber 3 is encapsulated in a vapor extractor in the form of a metal casing 6 comprising side walls 7 extending into a upwards sloping roof wall 8, which at the center extends into a vapor outlet in the form of a circular-cylindrical vent 9, which terminates into the surroundings. Although no bottom of the casing is shown in the figures, it may comprise a bottom wall, which can also be used to catch residues falling off the liver pieces 2 during steam treatment in the chamber 3.

Steam treatment of the fish liver is carried out in the steam treatment zone 4, which is defined on its upper side by an internal metal steam dome 10. The metal steam dome comprises a rectangular or quadratic roof wall 11 connected to sidewalls 12, 13 and front and back walls 14, 15. As can be seen from comparing Figs 1 and 2, the front and back walls need to be smaller in the height direction in order to allow for the liver pieces 2 to pass. The metal steam dome 10 is surrounded on its sides and at its upper end by the vapor extraction zone 5, which extends from the metal steam dome 10 to the metal casing 6.

A conveyor comprising a conveyor band 16 is arranged for transporting the liver pieces 2 through the treatment chamber 3 (more specifically the steam treatment zone 4), via a fish liver inlet 17 at the front and a fish liver outlet 18 at the back of the apparatus 1.

The steam treatment zone 4 comprises a number of steam dischargers in the form of very schematically shown steam tubes or steam lances provided above and below said conveyor band. In the present embodiment there are four upper steam lances 19 and three lower steam lances 20. The steam lances 19, 20 are essentially each a longitudinal tube with a number of steam discharge holes or nozzles (not shown). The steam lances 19, 20 are connected to a common steam supply line 21 via respective valves 22 to hereby discharge free steam into the steam treatment zone 4. The number and type of steam dischargers may of course be varied according to specific circumstances.

The moving conveyor band 16 of the conveyor is preferably manufactured from wire grid or like flexible sheet material with large holes to allow for the steam to easily pass it to reach the liver pieces 2. The conveyor band 16 revolves around not shown rollers at each end.

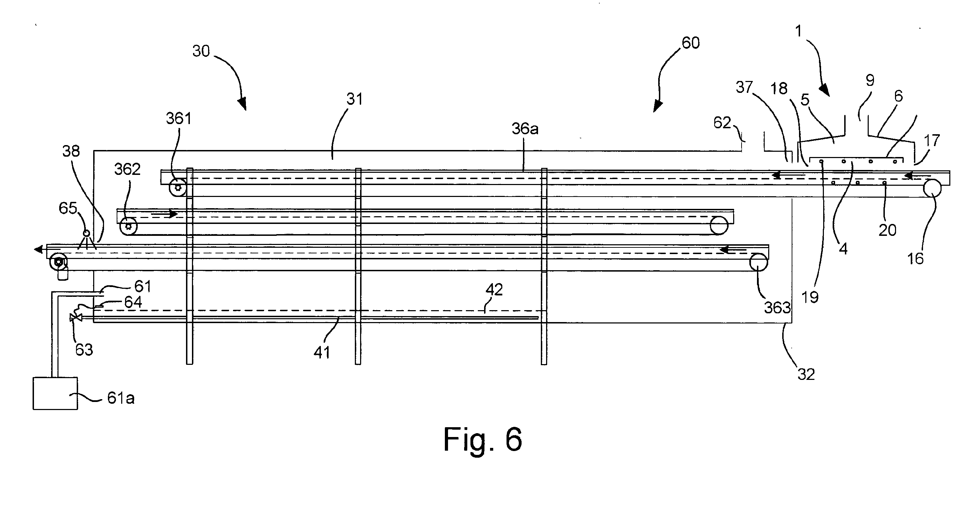

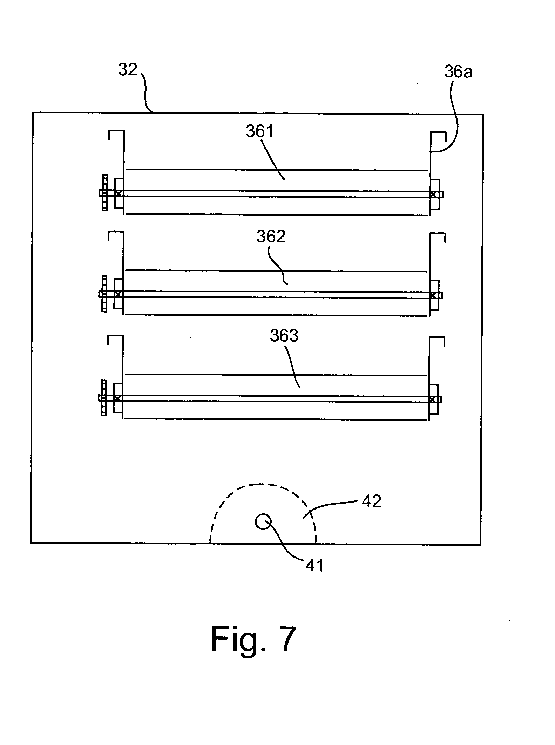

The conveyor transports the liver pieces 2 out of the fish liver outlet 18 and optionally to further process steps. Further process steps may comprise for example a water washing station (not shown) positioned along or at the end of the conveyor band, the water washing station washing off any remains of membrane and/or nematodes on the exiting steam treated liver pieces 2. It may also comprise smoking and/or oil-reducing steps, cf. also the description of the example of Figs 6 and 7 below.

An embodiment of the method according to the first aspect of the invention carried out on the apparatus 1 according to Figs 1 to 3 is described in the following.

The raw, unprocessed cod liver can in principle be treated as one whole piece, but typically one whole cod liver is cut into up to four pieces of approximately equal size. Each piece 2 comprises a chunk of liver meat partly surrounded by the liver's connective tissue membrane, which is attached to the raw liver meat. A number of nematodes are typically situated on the inside of the membrane in respective depressions of the liver meat, the depressions extending along the "surface" of the liver meat.

The raw liver pieces 2 are deposited on an upper part of the conveyor band 16 at the inlet opening 17, the conveyor transporting the liver pieces 2 pass the front wall 14 into the steam treatment zone 4 below the metal steam dome 10. It is important to ensure that the liver pieces 2 are positioned at a distance from each other to avoid untreated spots. The liver pieces 2 are conveyed on the conveyor band 16 through the zone 4 and exits through the outlet opening 18.

Dependent on the speed of the conveyor band 16 the travelled length inside the treatment zone 4, and thus the length of the steam dome 10, can be varied to ensure a sufficient treatment time.

Free steam flowing from a not shown steam manufacturing unit through supply line 21 and valves 22 is discharged through the steam lances 19, 20 into the steam treatment zone 4. The fish liver is treated with free steam (about 100°C) for a period of time sufficient to allow for the connective tissue membrane to contract, thereby pulling out the nematodes from the respective depressions of the liver meat, and to allow for the connective tissue membrane to be released from the liver meat. The treatment time depends among others on the amount of steam discharged into the steam treatment zone 4. In this specific embodiment the treatment time varies from 30 to 90 seconds, and is preferably just below a minute, i.e. about 40 to 60 seconds, most preferred about 50 seconds. The speed of the conveyor band 16 is adjusted according to the desired treatment time.

Excess air and steam from the treatment chamber 5 is collected by the metal casing 6 to be ventilated through the vent 9.

Optionally, a control valve (not shown) for controlling pressure in the steam chamber may be installed to avoid over-pressure and excessive loss of steam to the surroundings.

In the embodiments of the apparatus according to the second aspect of the invention described herein, free steam is discharged into the treatment chamber. However, if varying the conditions, for example variation of the pressure in the treatment chamber 5, it is in principle possible to carry out the process at different steam temperatures, such as at 95°C or 105°C. However, it is preferred to use free steam (i.e. with a temperature of about 100°C).

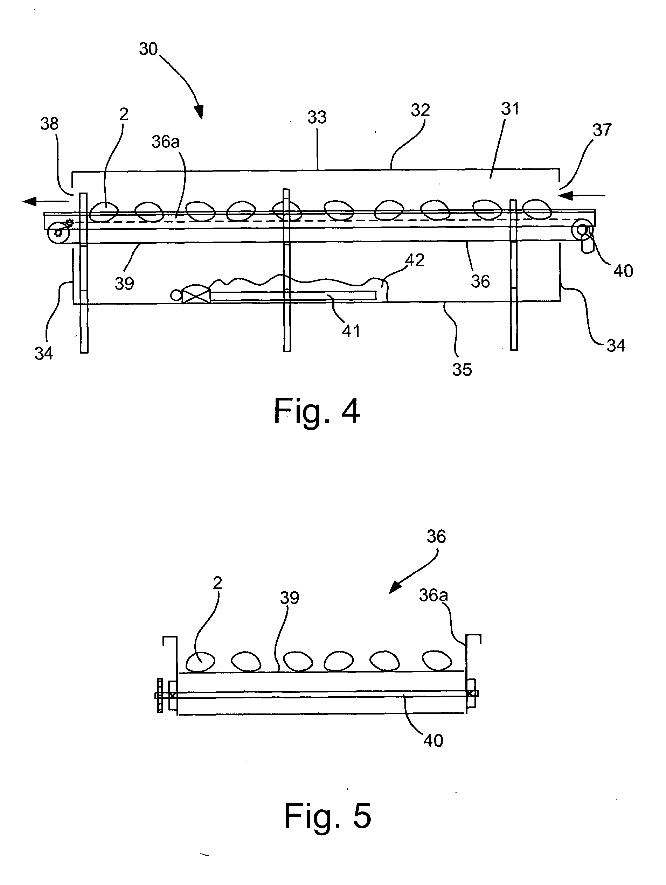

Fig. 4 shows an apparatus 30 for carrying out a method according to an example of a method, more specifically a method for reducing the oil content of cod liver. Fig. 5 shows a view of a detail of the apparatus 30 in another view. The apparatus 30 comprises a treatment chamber 31 for treating pieces 2 of fish liver with hot humid air.

Treatment of the fish liver is carried out in the treatment chamber 31. The treatment chamber 31 is encapsulated in a box-shaped metal casing 32 comprising a flat roof wall 33 surrounded by four vertical side walls 34 extending into a bottom wall 35.

A conveyor 36 is arranged for transporting the liver pieces 2 through the treatment chamber 31, via a fish liver inlet 37 at the front and a fish liver outlet 38 at the back of the apparatus 30, the openings 37, 38 being cut in the side walls of the treatment chamber 31. Again, a moving band 39 of the conveyor 36 is preferably manufactured from wire grid or like flexible sheet material with large holes to allow for air to easily pass it to reach the liver pieces 2. The moving band 39 revolves around respective conveyor shafts 40. Walls 36a are provided on each side of the moving band 39 to ensure that the liver pieces stay on the band 39.

On the bottom wall 35 a steam discharger in the form of a steam lance 41 of the same general provision as the steam lances 19, 20 explained above is provided. The steam lance 41 is surrounded with a moisture-heat distributer in the form of a sponge 42, which ensures that moisture and heat from the discharged steam is absorbed by the air in the treatment chamber 31, i.e. it is not discharged on steam form directly into the treatment chamber 31. Thus, the air inside the treatment chamber 31 takes up the moisture from the sponge such as to raise the relative air humidity up to near 100%. This avoids condensation on the surfaces of the fish liver. The steam lance 41 is essentially a longitudinal tube with a number of steam discharge holes. The steam lance 41 is connected to a not shown steam supply line via respective not shown valves. In the present example one steam lance 41 is provided. The number and type of steam dischargers may of course be varied according to specific circumstances.

The conveyor 36 transports the liver pieces 2 out of the fish liver outlet 38 and optionally to further process steps such as canning of the goods.

An example of a method carried out on the apparatus 30 according to Figs 4 and 5 is described in the following.

Again, the unprocessed cod liver can in principle be treated as one whole piece, but in the present embodiment several smaller pieces are processed. The liver pieces 2 initially comprise liver meat at least partly surrounded by tissue membrane attached to the liver meat. The membrane is at least partially removed, or at least detached from the liver meat, preferably by means of a method according to the first aspect of the present invention, more preferably using the method as explained above.

The liver pieces 2 are deposited on the conveyor 31 at the inlet opening 37, the conveyor 36 transporting the liver pieces 2 pass the wall 37 and enter the treatment chamber 31. Again, it is important to ensure that the liver pieces 2 are positioned at a distance from each other to avoid untreated spots. The liver pieces 2 are conveyed on the band 39 of the conveyor 36 through the treatment chamber 31 and exit through the outlet opening 38.

Free steam flowing from a not shown steam-manufacturing unit is discharged through the steam lances 41 into the sponge 42. The fish liver is treated with hot, moist air for a period of time sufficient to allow for the oil content to be reduced to a desired level. The treatment time depends among others on the amount of steam discharged into the treatment chamber 31. In this specific example the treatment time varies for a period of time between 5 and 30 minutes, preferably 10 and 25 minutes, most preferred 15 and 20 minutes. The humid air inside the chamber is in principle kept at a relative air humidity of 80 to 100%, preferably 90 to 100%, more preferred at least 95%, most preferred at least 98 or 99%, and a temperature of 40 to 70°C, preferably 50 to 60°C, more preferred 53 to 57°C, most preferred about 55°C. The speed of the conveyor 36 is adjusted according to the desired treatment time.

If the fish liver is to be smoked, this is preferably carried out in the treatment chamber 31 while simultaneously reducing the oil content by the use of hot, moist air. To this end a smoke discharger can be provided within the treatment chamber 31.

The fish liver oil is preferably collected at the bottom of the treatment chamber 31. The oil can be burned or can be used as nutrition.

Although methods according to the examples can be carried out separately, it is preferred to carry them out in series, as was hinted at in the above.

Accordingly, Figs 6 and 7 show an apparatus 60, which combines the apparatuses of the previous embodiments and examples. Only differences from the previous embodiments and examples will be described in the following. Further, similar or like elements of the present embodiment will be provided with similar reference signs. The liver pieces 2 are not shown in these figures.

The apparatus 60 comprises an apparatus 1 for carrying out a method for removal of nematodes (not shown) from pieces of cod liver 2. The apparatus 1 is similar to the apparatus 1 described in connection with Figs 1 to 3 above. The conveyor 16 continues from the liver outlet 18 into a treatment chamber 31 of an apparatus 30, which is essentially similar to the apparatus 30 described in connection with Figs 4 and 5 above. Thus, the conveyor 16 extends into a conveyor 36a of the apparatus 30. In the present embodiment the apparatus 30 comprises three conveyors 361, 362 and 363, which are positioned in continuation of each other in three different levels of the treatment chamber 31 in order to prolong the treatment time in the apparatus 30. Further steam lances may be provided as needed.

In this embodiment the apparatus 30 further comprises a smoke inlet 61 and smoke outlet in the form of a chimney 62 for providing smoking of the fish liver while it is being oil reduced inside the treatment chamber 31. The smoke inlet 61 is connected to a smoke generator 61a. Further, a steam lance 41 of the apparatus 30 is connected to a valve 63, which is controlled by control means 64. Again, the steam lance 41 is entirely covered by a sponge 42. The steam lances 19, 20, 41 preferably receive steam from a common steam generator.

The process of treating fish liver on the apparatus 60 is carried out as follows (cf. arrows in Fig. 6). Raw fish liver pieces (not shown) enter from a liver inlet 17 of the apparatus 1 and are steam treated in the treatment zone 4 to loosen membrane and nematodes as explained above. Then the liver pieces enter the treatment chamber 31 of the apparatus 30 through liver inlet 37. Having been transported on conveyors 361, 362, 363 in sequence (conveyor 362 revolving the opposite way) to exit through liver outlet 38, the liver pieces have been treated by means of hot, moist air to reduce oil content as explained above. Finally, the processed liver pieces are gently sprayed or rinsed with cold water from a sprayer 65 at the liver outlet 38. This washes off any remaining residues of membrane or nematodes on the surface of the liver pieces.

In the above-described examples (oil removal), it might be preferred to let the cod pieces drip off for a period of time after treatment to further reduce the oil content. It is preferred to let the liver drip off for about 5 to 15 minutes.

In all the above methods it is preferred to salt the liver pieces. Heavy salting is possible before treatment, but it is preferred to add an amount, for example 3 to 7 ml, of strong salt solution during canning. Alternatively, the liver pieces can be treated in a salt solution, preferably of about 1 to 3%, in a rinsing vessel for a suitable period of time, preferably about 5 to 15 minutes.

### Example 1

A non-salted raw cod liver piece was treated with free steam in a setup corresponding to the apparatus 1 described in connection with Figs 1 to 3 above. After barely 1 minute of steam treatment all membrane and nematodes were released from the liver meat. A few residues were rinsed off with cold water. Treated product weight was about 380 g. The liver piece was then treated with moist air at about 60°C in a setup corresponding to that described in connection with Figs 4 and 5 above. After 6 minutes the weight was reduced by 10.8%, after 10 minutes 19.2 %, and after 14 minutes 31.3 %. The liver was considered to still have a satisfactory structure. Two cans of 120 and 121 g net weight, respectively, were autoclaved in an autoclave for 65 minutes at 110°C. Drained weight was 61.9 and 71.3 g, respectively. The taste was satisfactory.

### Example 2

A heavy salted (12 %) cod liver piece of about 285 g was treated with free steam in a setup corresponding to the apparatus 1 described in connection with Figs 1 to 3 above. After 1 minute of steam treatment all membrane and nematodes were released from the liver meat. A few residues were rinsed off with cold water. Treated product weight was about 255 g. The liver piece was then treated with moist air at about 60°C in a setup corresponding to that described in connection with Figs 4 and 5 above. After 6 minutes the weight was reduced by 19.6 %, after 10 minutes 27.4 %, and after 14 minutes 31.3 %. The liver was considered to barely have a satisfactory structure. Two cans of 121 and 65 g net weight, respectively, were autoclaved in an autoclave for 65 minutes at 110°C. Drained weight was 71.2 and 36.9 g, respectively.

Treated liver pieces were generally surprisingly good-looking and somewhat light. Weight from one can was acceptable. The other can contained liver crumbles, which was due to the heavy salting of the raw liver piece.

### Example 3

A cod liver piece was treated with free steam in a setup corresponding to the apparatus 1 described in connection with Figs 1 to 3 above. After 1 minute of steam treatment all membrane and nematodes were released from the liver meat. A few residues were rinsed off with cold water. The liver piece then rested at about 20°C with normal air moisture content. After 6 minutes virtually no oil (about a half tablespoon) had been extracted from the liver.

### Example 4

A cod liver piece of about 838 g was treated with free steam in a setup corresponding to the apparatus 1 described in connection with Figs 1 to 3 above. After 1 minute of steam treatment all membrane and nematodes were released from the liver meat. A few residues were rinsed off with cold water. The liver piece was then treated with air of low relative moisture content at about 60°C. After 14 minutes the weight had been reduced by 7.9 %, after 34 minutes by 25.0 %.

### Example 5

A cod liver piece was treated with free steam in a setup corresponding to the apparatus 1 described in connection with Figs 1 to 3 above. Heavy salting of the raw liver piece was replaced by a 2% salt solution in a simulated rinsing vessel for about 10 minutes. After 1 minute of steam treatment all membrane and nematodes were released from the liver meat. A few residues were rinsed off with cold water. Treated product weight about 775 g. The liver piece was then treated with moist air at about 50°C in a setup corresponding to that described in connection with Figs 4 and 5 above. After 6 minutes the weight was reduced by 10.5 %, after 10 minutes 18.5 %. After 10 minutes of dripping off the weight was reduced by 25.7 %. The liver was a little soft, but good-looking. The taste was satisfactory.

### Example 6

A cod liver piece was treated with free steam in a setup corresponding to the apparatus 1 described in connection with Figs 1 to 3 above. Heavy salting of the raw liver piece was replaced by a 2% salt solution in a simulated rinsing vessel for about 10 minutes. After 1 minute of steam treatment all membrane and nematodes were released from the liver meat. A few residues were rinsed off with cold water. Treated product weight about 706 g. The liver piece was then treated with moist air at about 40°C in a setup corresponding to that described in connection with Figs 4 and 5 above. After 6 minutes the weight was reduced by 7.2 %, after 10 minutes 11.5 %. After 10 minutes of dripping off the weight was reduced by 18 %. The liver was a little soft, but good-looking. The taste was satisfactory.

## Claims

1. A non-therapeutic method for removal of nematodes from fish liver, preferably cod liver, said fish liver comprising liver meat at least partly surrounded by connective tissue membrane attached to said liver meat, said nematodes being situated on an inside of said membrane in respective depressions of said liver meat,
said method being **characterized by** comprising the steps of
treating said fish liver with steam for a period of time sufficient to allow for said connective tissue membrane to contract, thereby pulling out said nematodes from said respective depressions, and
further treating said fish liver with steam for a period of time sufficient to allow for said connective tissue membrane to be released from said liver meat.

2. A method according to claim 1, wherein
said steam has a temperature of 90 to 110°C, preferably 95 to 105°C, more preferred 99 to 101°C, preferably said steam is in the form of free steam, i.e. with a temperature of about 100°C and/or
a total steam treatment time lies within an interval from 2 to 90 seconds, preferably 20 to 70 seconds, more preferred 40 to 60 seconds, most preferred 45 to 55 seconds.

3. A method according to claim 1 or 2, wherein said treatment steps are carried out in a steam chamber, pieces of fish liver being transported on a conveyor band, preferably comprising a wire grid, through said steam chamber, steam dischargers above and below said conveyor band preferably discharging steam into said steam chamber.

4. A method according to claim 3, wherein said steam treatment steps are carried out in a steam treatment zone defined on its upper side by an internal steam dome surrounded on its sides and at its upper end by a vapor extractor extending into a vapor outlet.

5. A method according to any one of claims 1 to 4, wherein after said steam treatment steps the step of washing, rinsing or spraying off any remains of membrane and nematodes, preferably by means of water, is carried out.

6. An apparatus adapted for carrying out the method according to any one of the previous claims,
**characterized in that** it comprises
a fish liver steam treatment chamber adapted for steam treating pieces of said fish liver,
said fish liver steam treatment chamber comprising a steam treatment zone and a vapour extraction zone, said steam treatment zone being adapted for steam treatment of said fish liver and being defined on its upper side by an internal steam dome surrounded on its sides and at its upper end by said vapour extraction zone, the latter being defined by a vapour extractor extending into a vapour outlet,
a fish liver wire grid conveyor band adapted for transporting pieces of said fish liver through said steam chamber via a fish liver inlet and a fish liver outlet, and
said steam treatment zone comprising a number of steam dischargers provided above and below said conveyor band, said steam dischargers being adapted for discharging free steam into said fish liver steam treatment chamber.

7. An apparatus according to claim 6, further comprising a water washing station positioned along said conveyor band, said water washing station being adapted to wash, rinse or spray off any remains of membrane and nematodes of steam treated fish liver exiting said fish liver steam treatment chamber.

## Patentansprüche

1. Nichttherapeutisches Verfahren zum Entfernen von Nematoden aus Fischleber, vorzugsweise Dorschleber, wobei die Fischleber, die Leberfleisch umfasst, wenigstens teilweise von an das Leberfleisch gebundener Bindegewebemembran umgeben ist, wobei die Nematoden an einer Innenseite der Membran in entsprechenden Vertiefungen des Leberfleischs angeordnet sind,
wobei das Verfahren **gekennzeichnet ist durch** Umfassen der Schritte
Behandeln der Fischleber mit Dampf über einen Zeitraum, der ausreicht, das Kontrahieren der Bindegewebemembran zu erlauben, um so die Nematoden aus den entsprechenden Vertiefungen herauszuziehen, und
Weiterbehandeln der Fischleber mit Dampf über einen Zeitraum, der ausreicht, das Ablösen der Bindegewebemembran von dem Leberfleisch zu erlauben.

2. Verfahren gemäß Anspruch 1, wobei
der Dampf eine Temperatur von 90 bis 110 °C aufweist, vorzugsweise 95 bis 105 °C, bevorzugter 99 bis 101 °C, wobei der Dampf vorzugsweise in der Form von freiem Dampf vorliegt, d. h. mit einer Temperatur von etwa 100 °C, und/oder
die Gesamt-Dampfbehandlungszeit in einem Bereich von 2 bis 90 Sekunden liegt, vorzugsweise 20 bis 70 Sekunden, bevorzugter 40 bis 60 Sekunden, höchst bevorzugt 45 bis 55 Sekunden.

3. Verfahren gemäß Anspruch 1 oder 2, wobei die Behandlungsschritte in einer Dampfkammer durchgeführt werden, Stücke von Fischleber auf einem Förderband, das vorzugsweise ein Drahtnetz umfasst, durch die Dampfkammer befördert werden und Dampfeinleiter über und unter dem Förderband vorzugsweise Dampf in die Dampfkammer einleiten.

4. Verfahren gemäß Anspruch 3, wobei die Dampfbehandlungsschritte in einer Dampfbehandlungszone durchgeführt werden, die an ihrer Oberseite durch eine interne Dampfkuppel definiert ist, die an ihren Seiten und an ihrem oberen Ende von einem Dunstabzug umgeben ist, der sich zu einem Dunstauslass erstreckt.

5. Verfahren gemäß einem der Ansprüche 1 bis 4, wobei nach den Dampfbehandlungsschritten der Schritt des Abwaschens, Abspülens oder Absprühens von Resten von Membran und Nematoden, vorzugsweise mithilfe von Wasser, durchgeführt wird.

6. Vorrichtung, ausgelegt zum Durchführen des Verfahrens gemäß einem der vorstehenden Ansprüche,
**dadurch gekennzeichnet, dass** sie
eine Fischleber-Dampfbehandlungskammer, ausgelegt zur Dampfbehandlung von Stücken der Fischleber,
wobei die Fischleber-Dampfbehandlungskammer eine Dampfbehandlungszone und eine Dunstabzugszone umfasst, wobei die Dampfbehandlungszone für die Dampfbehandlung der Fischleber ausgelegt ist und an ihrer Oberseite durch eine interne Dampfkuppel definiert ist, die an ihren Seiten und an ihrem oberen Ende von der Dunstabzugszone umgeben ist, wobei die letztgenannte durch einen Dunstabzug definiert ist, der sich zu einem Dunstauslass erstreckt,
ein Fischleber-Drahtnetz-Förderband, das dafür ausgelegt ist, Stücke der Fischleber über einen Fischleber-Einlass und einen Fischleber-Auslass durch die Dampfkammer zu befördern, und
die Dampfbehandlungszone mehrere Dampfeinleiter umfasst, die über und unter dem Förderband angeordnet sind, wobei die Dampfeinleiter dafür ausgelegt sind, freien Dampf in die Fischleber-Dampfbehandlungskammer einzuleiten,
umfasst.

7. Vorrichtung gemäß Anspruch 6, ferner umfassend eine Wasser-Waschstation, die entlang des Förderbands angeordnet ist, wobei die Wasser-Waschstation dafür ausgelegt ist, jegliche Reste von Membran und Nematoden von dampfbehandelter Fischleber, die aus der Fischleber-Dampfbehandlungskammer austritt, abzuwaschen, abzuspülen oder abzusprühen.

## Revendications

1. Méthode non thérapeutique d'élimination de nématodes à partir de foie de poisson, préférablement de foie de morue, ledit foie de poisson comprenant de la viande de foie au moins partiellement entourée d'une membrane de tissu conjonctif fixée à ladite viande de foie, lesdits nématodes étant situés sur un intérieur de ladite membrane dans des dépressions respectives de ladite viande de foie,
ladite méthode étant **caractérisée en ce qu'**elle comprend les étapes consistant à
traiter ledit foie de poisson par de la vapeur pendant une période de temps suffisante pour permettre à ladite membrane de tissu conjonctif de se contracter, extrayant ainsi lesdits nématodes à partir desdites dépressions respectives, et
traiter davantage ledit foie de poisson par de la vapeur pendant une période de temps suffisante pour permettre à ladite membrane de tissu conjonctif d'être libérée à partir de ladite viande de foie.

2. Méthode selon la revendication 1, **caractérisée en ce que**
ladite vapeur possède une température allant de 90 à 110°C, préférablement de 95 à 105°C, plus préférablement de 99 à 101°C, préférablement ladite vapeur se trouve sous la forme de vapeur libre, c'est-à-dire ayant une température d'environ 100°C, et/ou
un temps de traitement par vapeur total se trouve dans un intervalle allant de 2 à 90 secondes, préférablement de 20 à 70 secondes, plus préférablement de 40 à 60 secondes, plus préférablement de 45 à 55 secondes.

3. Méthode selon la revendication 1 ou 2, **caractérisée en ce que** lesdites étapes de traitement sont effectuées dans une chambre à vapeur, les morceaux de foie de poisson étant transportés sur une courroie transporteuse, comprenant de préférence un grillage de fil, à travers ladite chambre à vapeur, des déchargeurs de vapeur au dessus et en dessous de ladite courroie transporteuse déchargeant de préférence de la vapeur dans ladite chambre à vapeur.

4. Méthode selon la revendication 3, **caractérisée en ce que** lesdites étapes de traitement par vapeur sont effectuées dans une zone de traitement par vapeur définie sur sa face supérieure par un dôme de vapeur interne cerné sur ses côtés et au niveau de son extrémité supérieure par un extracteur de vapeur s'étendant en une sortie de vapeur.

5. Méthode selon l'une quelconque des revendications 1 à 4, **caractérisée en ce que**, après lesdites étapes de traitement par vapeur, l'étape d'élimination par lavage, rinçage ou pulvérisation, de tout reste de membrane et de nématodes, préférablement au moyen d'eau, est effectuée.

6. Appareil adapté pour mettre en oeuvre la méthode selon l'une quelconque des revendications précédentes, **caractérisé en ce qu'**il comprend :
une chambre de traitement par vapeur de foie de poisson, adaptée au traitement par vapeur de morceaux dudit foie de poisson,
ladite chambre de traitement par vapeur de foie de poisson comprenant une zone de traitement par vapeur et une zone d'extraction de vapeur, ladite zone de traitement par vapeur étant adaptée au traitement par vapeur dudit foie de poisson et étant définie sur sa face supérieure par un dôme de vapeur interne cerné sur ses côtés et au niveau de son extrémité supérieure par ladite zone d'extraction de vapeur, cette dernière étant définie par un extracteur de vapeur s'étendant en une sortie de vapeur,
une courroie transporteuse à grillage de fil, pour foie de poisson, adaptée au transport de morceaux dudit foie de poisson à travers ladite chambre à vapeur via une entrée de foie de poisson et une sortie de foie de poisson, et
ladite zone de traitement par vapeur comprenant un certain nombre de déchargeurs de vapeur au dessus et en dessous de ladite courroie transporteuse, lesdits déchargeurs de vapeur étant adaptés au déchargement de vapeur libre dans ladite chambre de traitement par vapeur de foie de poisson.

7. Appareil selon la revendication 6, comprenant en outre un poste de lavage par eau positionné le long de ladite courroie transporteuse, ledit poste de lavage par eau étant adapté à l'élimination par lavage, rinçage ou pulvérisation, de tout reste de membrane et de nématodes, à partir du foie de poisson traité par vapeur sortant de ladite chambre de traitement par vapeur de foie de poisson.
